# DEMANDE DE BREVET EUROPEEN

(11) **EP 1 306 667 A1**
(43) Date de publication de la demande: **02.05.2003**
(21) Numéro de dépôt: 02292466.6
(22) Date de dépôt: 07.10.2002
(51) Int. Cl.: G01N 27/82, G01N 27/90, G01R 33/09

(54) **Capteur pour la détection de défauts dans une pièce métallique par courants de Foucault**

(30) Priorité: 29.10.2001 FR 0113992
(71) Demandeur: Cegelec, 92500 Rueil-Malmaison (FR)
(72) Inventeur: Wache, Gilbert, 60300 Avilly St-Leonard (FR)
(74) Mandataire: Gosse, Michel

(57) **Abrégé**

Capteur (1, 100) pour la détection de défauts dans une pièce (5), comprenant un bobinage électrique (4) alimenté par un courant électrique variable pour créer un champ magnétique variable pénétrant au moins en partie dans ladite pièce à contrôler (5) et des moyens de détection de défauts constitués par au moins une magnétorésistance (6, 7), l'ensemble étant logé dans un boîtier de protection (2) comportant une face de détection (3) destinée à être disposée parallèlement et à proximité d'une surface de ladite pièce à contrôler (5), ledit bobinage (4) ayant son axe Δ disposé perpendiculairement à ladite face de détection (3), et ladite magnétorésistance (6, 7) étant située au voisinage de ladite face de détection (3), caractérisé en ce que ladite magnétorésistance (6, 7) est du type magnétorésistance géante, dite GMR, disposée de telle façon que son axe de sensibilité Δ1 à la variation d'un champ magnétique soit parallèle à ladite face de détection (3) du boîtier (2) et en ce qu'il comporte en outre un premier aimant permanent (8) disposé de telle sorte qu'il polarise magnétiquement la magnétorésistance, dans la direction de son axe sensible Δ1, à une valeur telle que, sur la courbe (R) représentative du signal de sortie (V) de la magnétorésistance en fonction de la valeur de la composante du champ magnétique (H) dans la direction de cet axe sensible, l'on soit en un point (11) situé au voisinage du milieu d'une portion sensiblement rectiligne de ladite courbe.

## Description

La présente invention concerne un capteur pour la détection de défauts dans une pièce.

La pièce à contrôler peut être conductrice de l'électricité en étant ou non ferromagnétique, l'invention permettant alors de détecter des défauts tels que des fissures en surface ou internes.

L'invention s'applique également à la détection de particules conductrices de l'électricité, ferromagnétiques ou non, situées dans un matériau non conducteur de l'électricité.

On connaît diverses techniques de contrôles non destructifs de pièces métalliques : par exemple, le contrôle par courants de Foucault par la mesure de l'impédance de bobines détectrices, ou encore le contrôle selon la méthode du flux de dispersion sur des matériaux ferromagnétiques, en utilisant des capteurs magnétorésistifs. Le document EP 0 736 173 B1 décrit, en relation avec la fig. 2 qui lui est associée, un capteur comprenant une bobine d'excitation 21, d'axe perpendiculaire à la surface du produit à contrôler, alimentée en courant électrique variable de façon à générer dans le produit des courants de Foucault.

Les moyens de détection comprennent deux bobines 22 de détection de courants de Foucault, montées en opposition, et deux magnétorésistances 23 disposées parallèlement l'une à l'autre et raccordées selon un montage différentiel. Les bobines détectrices de courants de Foucault sont coaxiales à la bobine d'excitation 21 et placées à l'intérieur de celle-ci, les magnétorésistances 23 s'étendant parallèlement à la direction axiale des bobines. Les bobines détectrices et les magnétorésistances sont reliées à des moyens de traitement qui comportent un circuit de traitement multivoies.

La présente invention a pour but de proposer une autre disposition de capteur ayant une très grande sensibilité.

L'invention a ainsi pour objet un capteur pour la détection de défauts dans une pièce, comprenant un bobinage électrique alimenté par un courant électrique variable pour créer un champ magnétique variable pénétrant au moins en partie dans ladite pièce à contrôler et des moyens de détection de défauts constitués par au moins une magnétorésistance, l'ensemble étant logé dans un boîtier de protection comportant une face de détection destinée à être disposée parallèlement et à proximité d'une surface de ladite pièce à contrôler, ledit bobinage ayant son axe Δ disposé perpendiculairement à ladite face de détection, et ladite magnétorésistance étant située au voisinage de ladite face de détection, caractérisé en ce que ladite magnétorésistance est du type magnétorésistance géante, dite GMR, disposée de telle façon que son axe de sensibilité Δ1 à la variation d'un champ magnétique soit parallèle à ladite face de détection du boîtier et en ce qu'il comporte en outre un premier aimant permanent disposé de telle sorte qu'il polarise magnétiquement la magnétorésistance, dans la direction de son axe sensible Δ1, à une valeur telle que, sur la courbe (R) représentative du signal de sortie (V) de la magnétorésistance en fonction de la valeur de la composante du champ magnétique (H) dans la direction de cet axe sensible, l'on soit en un point situé au voisinage du milieu d'une portion sensiblement rectiligne de ladite courbe.

Avantageusement, si la pièce à contrôler est en matériau ferromagnétique, le capteur comprend en outre au moins un second aimant permanent, associé à un circuit magnétique ouvert comprenant deux surfaces d'extrémité, de polarité opposée l'une par rapport à l'autre, et situées contre ladite face de détection et diamétralement de part et d'autre dudit bobinage électrique.

On va maintenant donner la description d'un exemple de mise en oeuvre de l'invention en se reportant au dessin annexé dans lequel :
La fig. 1 montre un capteur selon l'invention, particulièrement adapté pour le contrôle de pièces en matériaux amagnétiques.
La fig. 2 montre un capteur selon l'invention, particulièrement adapté au contrôle de pièces en matériau ferromagnétique.
La fig. 3 est un schéma bloc fonctionnel très simplifié d'un appareil détecteur pour la détection de défauts.
La fig. 4 montre la courbe de la tension V de sortie d'une magnétorésistance géante en fonction de la valeur H de la composante du champ magnétique dans la direction de l'axe de sensibilité de la magnétorésistance, de l'endroit où est la magnétorésistance, et sur cette courbe, le point de fonctionnement où l'on se place.

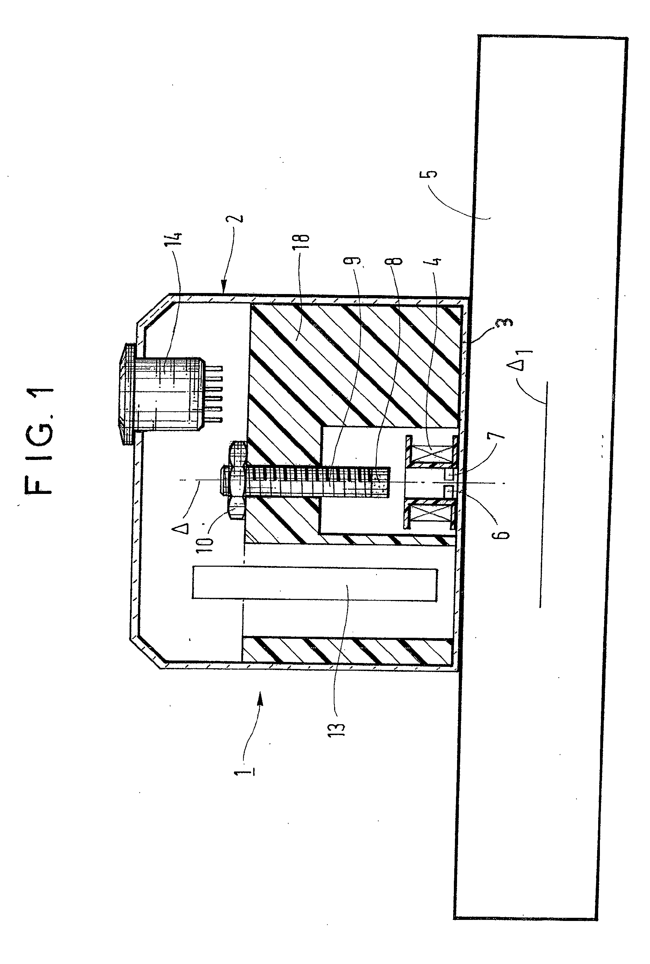

En se référant à la fig. 1 qui montre un capteur 1 selon l'invention, on voit, à l'intérieur d'un boîtier 2 en matériau non conducteur de l'électricité et comportant une face inférieure 3, dite face de détection, un bobinage électrique 4 d'axe Δ perpendiculaire à la face de détection 3.

Ce bobinage 4 est alimenté par un courant électrique variable de manière à créer un champ magnétique variable pénétrant au moins en partie dans une pièce à contrôler 5 le long de laquelle on vient déplacer le capteur 1.

Au voisinage de la face de détection 3 sont situées, à l'intérieur du bobinage 4 et près de son extrémité inférieure, deux magnétorésistances géantes 6 et 7.

On sait qu'une magnétorésistance géante, dite GMR, est un composant directionnel qui n'est sensible qu'à la composante du champ magnétique dirigée dans la direction de son axe de sensibilité. Une magnétorésistance géante est très sensible à la variation du champ dans cette direction.

Les magnétorésistances 6 et 7 sont ainsi disposées, côte à côte, de telle sorte que leur axe de sensibilité soit parallèle à la face de détection 3. La direction de cet axe de sensibilité est représentée par la ligne repérée Δ1.

On pourrait ne placer qu'une seule magnétorésistance géante, mais le fait d'en placer deux et de les associer en montage différentiel permet d'éliminer les causes d'erreurs dues aux variations de champs parasites au niveau des magnétorésistances lors des déplacements du capteur le long de la pièce 5. Par exemple, on s'affranchit en grande partie du champ magnétique terrestre qui provoquerait sans cela une erreur de mesure dans le cas où, par exemple, la trajectoire du capteur ne serait pas rectiligne.

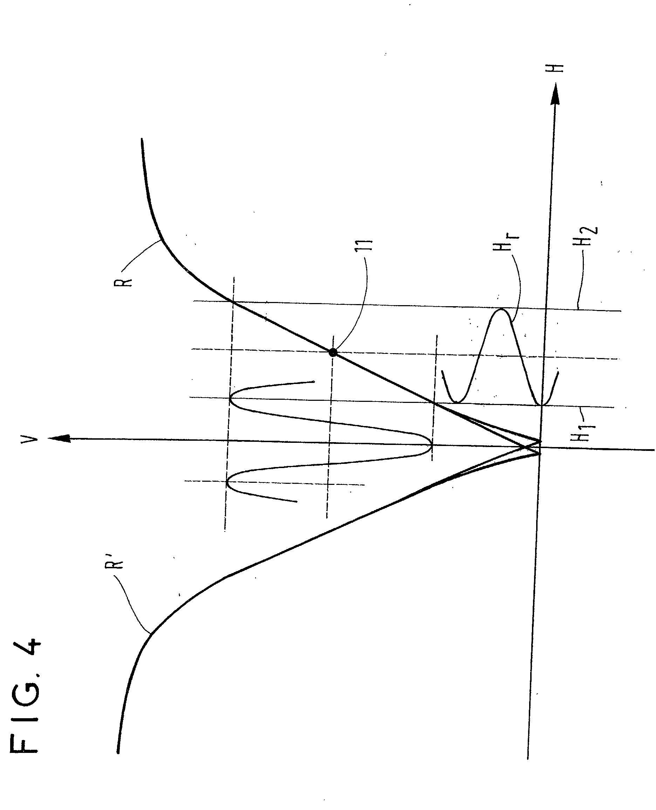

La fig. 4 montre la courbe de réponse R, R' de la tension V de sortie d'une magnétorésistance en fonction de la valeur du champ H qui la baigne (on ne considère que la valeur de la composante du champ H dans la direction de l'axe de sensibilité de la magnétorésistance). Comme on peut le voir sur cette figure, la courbe est symétrique par rapport à l'axe des ordonnées V, c'est-à-dire que la réponse est positive, que le champ soit dans un sens ou dans l'autre dans la direction de l'axe de sensibilité.

En revenant à la fig. 1, le capteur comprend en outre un aimant permanent 8 placé au-dessus du bobinage 4, c'est-à-dire de l'autre côté du bobinage par rapport à sa face située contre la face de détection 3.

Il est placé dans l'axe du bobinage à l'extrémité d'une tige filetée 9 se vissant dans un support non conducteur, non magnétique 18 percé d'un trou taraudé permettant de régler sa position le long de l'axe Δ du bobinage. Un écrou 10 permet de bloquer la position de réglage.

La position de l'aimant 8 est réglée de façon qu'il polarise magnétiquement, au niveau des magnétorésistances géantes 6 et 7, l'axe sensible Δ1 de ces magnétorésistances à une valeur telle que sur la courbe R de la fig. 4, l'on soit situé en un point 11 au voisinage du milieu de la portion sensiblement rectiligne de la courbe.

Ainsi, le champ résultant Hr, dans la direction de l'axe de sensibilité Δ 1, en l'absence de défauts dans la pièce 5, oscille entre deux valeurs H₁ et H₂ correspondant à une partie rectiligne de la courbe R et située en dehors de la zone inférieure où existe de l'hystérésis, et avant la saturation.

A l'intérieur du capteur 1 est également logée une carte de circuit imprimé 13 comportant les composants nécessaires au montage différentiel des magnétorésistances géantes GMR 6 et 7, ainsi que les circuits d'adaptation nécessaires. Un connecteur 14 permet les liaisons avec cette carte ainsi que l'alimentation du bobinage 4 et des GMR 6 et 7.

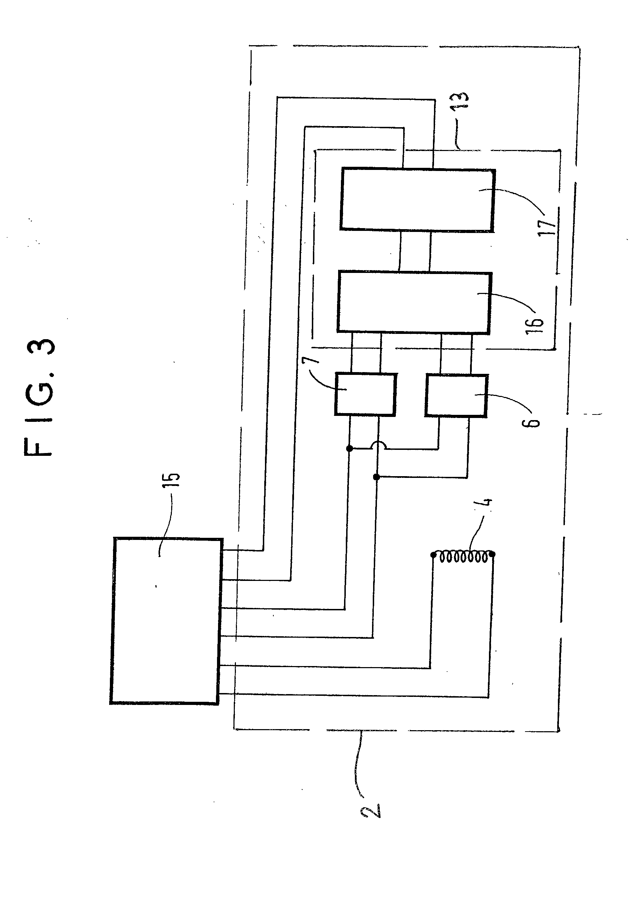

Le connecteur 14 est d'autre part relié à un appareil 15, fig. 3, appelé générateur de courants de Foucault qui assure les alimentations du bobinage 4, des GMR 6 et 7 et le traitement du signal en sortie des circuits de montage différentiel 16 des GMR et des circuits d'adaptation 17 situés sur la carte de circuit imprimé 13.

Le capteur tel que décrit fig. 1 est particulièrement bien adapté au contrôle de pièces 5 en matériau conducteur non ferromagnétique.

Le bobinage 4, alimenté en courant variable, induit dans la pièce 5 des courants de Foucault qui produisent eux-mêmes un champ magnétique variable et il en résulte, au niveau des GMR, un champ résultant Hr (composante dans la direction de l'axe sensible Δ1 des GMR).

Si le capteur rencontre un défaut tel qu'une fissure, les courants de Foucault sont déviés et il en résulte une modification du champ produit par ces courants et donc du champ résultant Hr qui est ainsi détecté.

Par le générateur de courants de Foucault 15, on peut modifier la fréquence de l'excitation du bobinage 4, ce qui permet de rechercher des défauts à des profondeurs variées sur la pièce 5.

Ce capteur peut également être utilisé pour détecter des particules conductrices, ferromagnétiques ou non, dans une pièce 4 non conductrice : lors du passage du capteur devant de telles particules, le champ magnétique résultant Hr sera modifié et donc détecté.

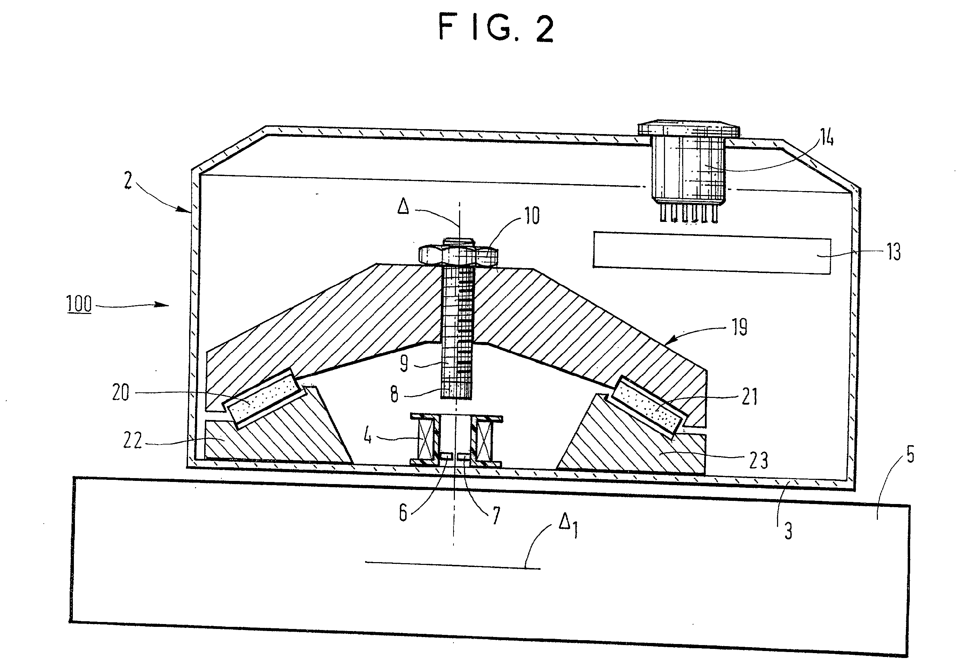

La fig. 2 montre un capteur conforme à l'invention, mais particulièrement adapté à la recherche de défauts dans des pièces 5 en matériau ferromagnétique.

A cet effet, le capteur 100, outre le bobinage d'excitation 4 et l'aimant permanent 8 de polarisation des GMR 6 et 7 comme dans le cas de la fig. 1, comprend en plus un moyen pour magnétiser localement la pièce à contrôler 5 de façon que toutes les zones balayées par le capteur 100 aient une perméabilité magnétique relative µr constante et qu'ainsi on ne détecte pas de défauts apparents provenant en fait d'une hétérogénéité magnétique de la pièce 5.

Par ailleurs, afin de permettre de détecter des défauts profonds dans la pièce, il est souhaitable de magnétiser la pièce 5 assez fortement, de manière à obtenir une perméabilité µr proche de 1.

Pour ce faire, le support 18 du capteur 1 est remplacé par un circuit magnétique ouvert 19 incluant au moins un aimant permanent, deux : 20 et 21, dans le cas de la fig. 2 décrite.

Ce circuit magnétique 19 comporte deux masses polaires 22 et 23 dont les surfaces d'extrémités de polarité opposée sont situées contre la surface de détection 3, diamétralement situées, dans la direction de Δ1, de part et d'autre du bobinage 4.

D'une manière générale, ce circuit magnétique est disposé de telle façon que les lignes de champ allant d'une masse polaire à l'autre passent toutes dans la pièce 5 sans passer au niveau des GMR 6 et 7.

Le circuit magnétique 19 est en outre utilisé comme support pour l'aimant 8 et sa tige support filetée 9 se vissant plus ou moins dans un trou taraudé du circuit magnétique 19. On retrouve l'écrou de blocage 10. Comme dans le cas de la fig. 1, on retrouve la carte de circuit imprimé 13 sur laquelle sont placés les circuits 16 et 17 de la fig. 3 assurant les mêmes fonctions, ainsi que le connecteur 14.

Comme dans le cas de la fig. 1, en cas de défauts, tel qu'une fissure, dans la pièce ferromagnétique 5 de cette fig. 2, les courants de Foucault produits par le bobinage 4 dans la pièce 5 sont déviés et produisent un champ induit différent modifiant le champ résultant Hr au niveau des GMR 6 et 7.

## Revendications

1. Capteur (1, 100) pour la détection de défauts dans une pièce (5), comprenant un bobinage électrique (4) alimenté par un courant électrique variable pour créer un champ magnétique variable pénétrant au moins en partie dans ladite pièce à contrôler (5) et des moyens de détection de défauts constitués par au moins une magnétorésistance (6, 7), l'ensemble étant logé dans un boîtier de protection (2) comportant une face de détection (3) destinée à être disposée parallèlement et à proximité d'une surface de ladite pièce à contrôler (5), ledit bobinage (4) ayant son axe Δ disposé perpendiculairement à ladite face de détection (3), et ladite magnétorésistance (6, 7) étant située au voisinage de ladite face de détection (3), **caractérisé en ce que** ladite magnétorésistance (6, 7) est du type magnétorésistance géante, dite GMR, disposée de telle façon que son axe de sensibilité Δ1 à la variation d'un champ magnétique soit parallèle à ladite face de détection (3) du boîtier (2) et **en ce qu'**il comporte en outre un premier aimant permanent (8) disposé de telle sorte qu'il polarise magnétiquement la magnétorésistance, dans la direction de son axe sensible Δ1, à une valeur telle que, sur la courbe (R) représentative du signal de sortie (V) de la magnétorésistance en fonction de la valeur de la composante du champ magnétique (H) dans la direction de cet axe sensible, l'on soit en un point (11) situé au voisinage du milieu d'une portion sensiblement rectiligne de ladite courbe.

2. Capteur (100) selon la revendication 1 pour la détection de défauts d'une pièce ferromagnétique (5), **caractérisé en ce qu'**il comprend en outre au moins un second aimant permanent (20, 21), associé à un circuit magnétique ouvert (19) comprenant deux surfaces d'extrémité, de polarité opposée l'une par rapport à l'autre, et situées contre ladite face de détection (3) et diamétralement de part et d'autre dudit bobinage électrique (4).

3. Capteur selon l'une des revendications 1 ou 2, **caractérisé en ce qu'**il comprend deux dites magnétorésistances géantes (6, 7) montées selon un montage différentiel.

4. Capteur selon l'une des revendications 1 à 3, **caractérisé en ce que** ledit premier aimant permanent (8) est situé au-dessus dudit bobinage électrique (4), de l'autre côté du bobinage par rapport à sa face située contre ladite face de détection (3) et **en ce qu'**il comporte des moyens (9, 10) de réglage de sa position le long de l'axe (Δ) dudit bobinage (4).
